# EUROPEAN PATENT APPLICATION

(11) **EP 3 628 453 A1**
(43) Date of publication of application: **01.04.2020**
(21) Application number: 18197713.3
(22) Date of filing: 28.09.2018
(51) Int. Cl.: B25J 9/16

(54) **A CONTROL SYSTEM AND METHOD FOR A ROBOT**

(71) Applicant: Siemens Aktiengesellschaft, 80333 München (DE)
(72) Inventor: ZHUO, Yue, Beijing, 100084 (CN); LO, George, Langhorne, PA Pennsylvania 19047 (US); WANG, Zi Jian, Beijing, 100102 (CN)
(74) Representative: Isarpatent

(57) **Abstract**

The subject matter relates to a control system for a robot, comprising: a program executor to translate a motion command for a robot so as to have a format that is identifiable by a robot control kernel; a robot control kernel to generate robot motion data based on the translated motion command; and a robot Digital Twin to simulate the motion of the robot based on the generated robot motion data and physical conditions of the robot during robot simulation.

## Description

### FIELD

The application relates to robot field, especially industrial robots, and more particularly, to a control system for a robot and a method for simulating motion of a robot in the control system.

### BACKGROUND

In an industrial robot field, a robot simulation system is used to create application for a physical robot. The robot movement for the application may be verified before actually moving the physical robot. Robot simulation is used to simulate the movement of the physical robot so as to carry out the verification. The robot simulation is the key technology for an industrial robot and automation.

Current robot simulation may be classified into two categories. The first category is a virtual robot in a simulation environment. In this case, a virtual robot with a 3D model and motion control algorithm is constructed in a simulation environment, which is capable of emulating the motion of a physical robot in a real work envelope. However, the simulation environment is different from the physical robot control environment. Thus, the simulated robot movement may not be repeated accurately in the physical environment. This will raise certain risks, including collision between a robot and an object, and thus declining in trajectory accuracy. Additionally, for the first category, the simulation is only about the robot control algorithm part, and the virtual robot will move according to the theoretical output of the algorithm without considering the physical conditions of the robot (e.g., the mass of the robot arm, the motor friction of the joints).

The second category is display of robot movement based on physical robot movement data. In this case, a robot 3D model is constructed in a simulation environment, and the movement of a physical robot is displayed based on the physical robot movement data. In the second category, there is no simulation procedure, only the robot 3D model is driven by the recorded or real-time movement data of a physical robot. In this case, an additional system (including computing and display components) is required to run the control system or the robot 3D model, which will increase the cost of the whole robot system.

### SUMMARY

The following summary is provided to introduce a selection of concepts in a simplified form that are further described below in the detailed description. This summary is not intended to identify key features or essential features of the claimed subject matter, nor is it intended to be used to limit the scope of the claimed subject matter.

According to an embodiment of the subject matter described herein, a control system for a robot, comprising: a program executor to translate a motion command for the robot so as to have a format that is identifiable by a robot control kernel; a robot control kernel to generate robot motion data based on the translated motion command; and a robot Digital Twin to simulate the motion of the robot based on the generated robot motion data and physical conditions of the robot during robot simulation.

In an example of the above embodiment, the robot control kernel may be further configured to: configure its operation mode according to an operation mode instruction for the robot, wherein the operation mode includes one of a simulation mode and a real mode, and communicate the generated robot motion data to the robot Digital Twin when the operation mode is the simulation mode or to a drive for a motor on the robot body when the operation mode is the real mode.

In an example of the above embodiment, the control system may include a command parser to parse an operation mode command for the robot from the robot operator so as to identify the operation mode instruction.

In an example of the above embodiment, the robot Digital Twin may be further configured to: receive real robot motion data from the drive when the operation mode is the real mode, and simulate the motion of the robot based on the received real robot motion data.

In an example of the above embodiment, the physical conditions of the robot may comprise: physical parameters of the robot body and payload of the robot.

In an example of the above embodiment, the physical parameters of the robot body comprise at least one of: robot arm's mass, robot arm's length, motor fiction of each motor, and gravity of each joint, maximum rotation speed of each motor, rotation inertia of each motor, a torque of each motor and a current of each motor.

In an example of the above embodiment, the control system may include a human machine interface to input the operation mode command and the motion command; and/or a drive interface to exchange data between the robot control kernel and the drive.

In an example of the above embodiment, the robot Digital Twin may be further configured to send the simulated motion data of the robot back to the robot control kernel when the operation mode is the simulation mode, and the robot control kernel may be further configured to adjust the generated robot motion data based on the simulated motion data.

In an example of the above embodiment, the robot control kernel may be further configured to receive real robot motion data from the drive when the operation mode is the real mode, and adjust the generated robot motion data based on the real robot motion data.

In an example of the above embodiment, the robot motion data may comprise at least one of: position of each joint of the robot, velocity of each joint of the robot, and acceleration of each joint of the robot.

In an example of the above embodiment, the control system may be a dual-core system including an operation system (OS) core and a programmable logic controller (PLC) core, and wherein the robot Digital Twin is deployed on the OS core, and the program executor and the robot control kernel are deployed on the PLC core.

According to an embodiment of the subject matter, a method for simulating motion of a robot in a control system, comprising: translating a motion command for the robot so as to have a format that is identifiable by a robot control kernel of the control system; generating robot motion data based on the translated motion command by the robot control kernel; and simulating the motion of the robot based on the generated robot motion data and physical conditions of the robot during robot simulation.

In an example of the above embodiment, the method further comprises: configuring its operation mode according to an operation mode instruction for the robot, wherein the operation mode includes one of a simulation mode and a real mode, and communicating the generated robot motion data to the robot Digital Twin when the operation mode is the simulation mode or to a drive for a motor on the robot body when the operation mode is the real mode.

In an example of the above embodiment, the method further comprises: parsing an operation mode command for the robot from the robot operator so as to identify the operation mode instruction.

In an example of the above embodiment, the method further comprises: receiving real robot motion data from the drive when the operation mode is the real mode, and simulating the motion of the robot based on the received real robot motion data.

In an example of the above embodiment, the method further comprises: adjusting the generated robot motion data based on the simulated motion data.

In an example of the above embodiment, the method further comprises: receiving real robot motion data from the drive when the operation mode is the real mode, and adjusting the generated robot motion data based on the real robot motion data.

According to an embodiment of the subject matter, an apparatus for simulating motion of a robot in a control system, comprising: a translating means for translating a motion command for the robot from a robot operator so as to have a format that is identifiable by a generating means; a generating means for generating robot motion data based on the translated motion command; and a simulating means for simulating the motion of the robot based on the generated robot motion data and physical conditions of the robot during robot simulation.

According to an embodiment of the subject matter, a computer system for simulating motion of a robot in a control system, comprising: one or more processors; and a memory coupled to the one or more processors, for storing computer-executable instructions that, when executed, cause the one or more processors to perform the method for simulating motion of a robot in a control system as above.

According to an embodiment of the subject matter, a non-transitory computer-readable medium having computer-executable instructions to cause a computer system to perform the method for simulating motion of a robot in a control system as above.

With the above control system, simulation method and apparatus, the motion of the robot may be simulated based on both the generated robot motion data by the robot control kernel and physical conditions of the robot, and thus the simulation result may conform to the actual physical environment of the robot.

With the above control system, simulation method and apparatus, by configuring the operation mode of the robot control kernel according to an operation mode instruction for the robot, and communicating the generated robot motion data to the robot Digital Twin or a drive for a motor on the robot according to the configuration of the operation mode, both the simulation and the real movement of the robot may be realized in one control system.

With the above control system, simulation method and apparatus, by providing a parser in the control system, the robot operator may input the operation mode command in a simpler way.

With the above control system, simulation method and apparatus, by adjusting the generated robot motion data based on the simulated motion data, the robot motion data from the robot control kernel may be more accurate.

With the above control system, simulation method and apparatus, by adjusting the generated robot motion data based on the real robot motion data, the robot motion data from the robot control kernel may be more accurate.

With the above control system, simulation method and apparatus, by providing the robot Digital Twin to be deployed on the Windows core, and the program executor and the robot control kernel to be deployed on the PLC core, the efficiency of the control system may be improved significantly.

### BRIEF DESCRIPTION OF THE DRAWINGS

Various aspects, features and advantages of the subject matter will be more apparent from the detailed description set forth below when taken in conjunction with the drawings, in which use of the same reference number in different figures indicates similar or identical items.
FIG. 1 illustrates a block diagram of a control system for a robot according to an embodiment of the subject matter;
FIG. 2 illustrates an example of a human machine interface according to an embodiment of the subject matter;
FIG. 3 illustrates a method flowchart for simulating motion of a robot in the control system according to an embodiment of the subject matter;
FIG. 4 illustrates a data flow for a simulation mode in a control system according to an embodiment of the subject matter;
FIG. 5 illustrates a data flow for a real mode in a control system according to an embodiment of the subject matter;
FIG. 6 illustrates an example of a control system having a dual-core according to an embodiment of the subject matter;
FIG.7 illustrates a block diagram of an apparatus for simulating motion of a robot in a control system according to an embodiment of the subject matter; and
FIG. 8 illustrates a block diagram of a computer system for simulating motion of a robot in a control system according to an embodiment of the subject matter.
   10 control system 20 HMI device 30 drive 40 motor 50 display device
   110 program executor 120 robot control kernel 130 robot Digital Twin
   140 parser 150 HMI 160 drive interface
   1 key switch 2 emergency button 3 start/stop button 4 jogging button
   5 step/continuous button 6 robot program window 7 save and check button
   310 translate a motion command for a robot so as to have a format that is identifiable by a robot control kernel
   320 generate robot motion data based on the translated motion command
   330 configure operation mode according to an operation mode instruction
   340 communicate the generated robot motion data to the robot Digital Twin
   350 simulate the motion of the robot based on the generated robot motion data and physical conditions of the robot
   360 communicate the generated robot motion data to the drive for a motor on the robot body
   370 control the motors on the robot body to move according to the robot motion data from the robot control kernel
   380 send real robot motion data to the robot Digital Twin
   390 perform the simulation based on the real robot motion data
   700 apparatus 710 translating means 720 generating means
   730 simulating means 740 configuring means 750 communicating means
   760 parsing means 800 computer system 810 one and more processors
   820 memory

### DETAILED DESCRIPTION

The subject matter described herein will now be discussed with reference to example embodiments. It should be understood these embodiments are discussed only for the purpose of enabling those skilled persons in the art to better understand and thus implement the subject matter described herein, rather than suggesting any limitations on the scope of the subject matter.

As used herein, the term "includes" and its variants are to be read as open terms that mean "includes, but is not limited to". The term "based on" is to be read as "based at least in part on". The terms "one embodiment" and "an embodiment" are to be read as "at least one implementation". The term "another embodiment" is to be read as "at least one other embodiment". The term "a" or "an" is to be read as "at least one". The terms "first", "second", and the like may refer to different or same objects. Other definitions, explicit and implicit, may be included below. A definition of a term is consistent throughout the description unless the context clearly indicates otherwise.

In the current robot simulation approach, the robot simulation is based on a 3D model and motion control algorithm constructed in a simulation environment, which cannot conform to the actual physical environment of the robot. In order to solve the above problem, a new simulation approach is provided in the application. In the provided simulation approach, the motion of the robot may be simulated based on both the generated robot motion data by the robot control kernel and physical conditions of the robot, and thus the simulation result may conform to the actual physical environment of the robot.

In the application, term "Digital Twin" refers to a simulation process integrating multidisciplinary, multiphysics, multi-scale, multi-probability, which makes full use of the physical model, sensor update, operating history and other data, and completes the mapping in the virtual space to reflect the corresponding physical equipment life cycle process.

In the application, term "robot motion data" refers to the motion data of a robot generated by the robot control kernel based on the motion command, and term "real robot motion data" refers to real motion data of a robot during moving according to the generated robot motion data from the robot control kernel.

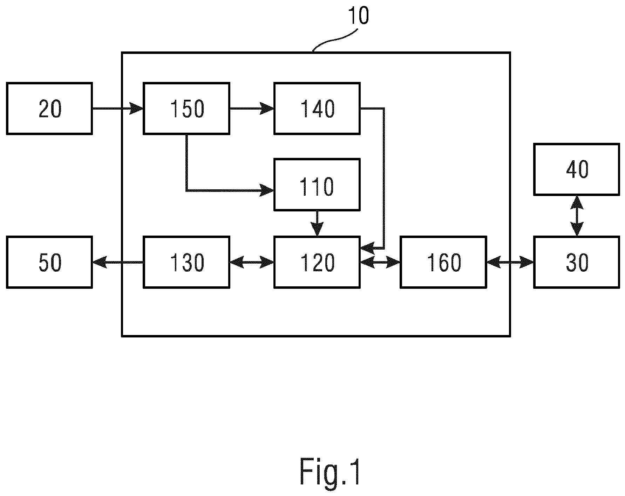

FIG. 1 illustrates a block diagram of a control system 10 for a robot according to an embodiment of the subject matter. As shown in FIG. 1, the control system 10 includes a program executor 110, a robot control kernel 120 and a robot Digital Twin 130.

The program executor 110 is configured to translate a motion command for a robot from a robot operator so as to have a format that is identifiable by the robot control kernel 120. In the embodiments, the motion command may be a command for instructing a robot to move in a specified motion manner. The motion command for a robot may include a moving command, a grabbing command, a releasing command, a walking command, a running command, a rotating command, a jumping command etc. In general, the motion command may have a format that may be identified by the program executor 110 (such as a text format, a program language format etc.) and unidentified by the robot control kernel 120, and inputted to the program executor 110 from or by a robot operator (e.g., via a human machine interface (HMI) 150). After receiving the motion command, the program executor 110 may translate the format of the motion command so as to have a format that is identifiable by the robot control kernel 120, that is, translate the motion command into a command and a parameter value of the command that are identifiable by the robot control kernel 120. For example, after receiving the motion command, the program executor 110 may load the program command or the program corresponding to the command having a text format, and translate the command into a format that is identifiable by the robot control kernel 120. Here, the program executor 110 is similar to a compiler for a program.

The robot control kernel 120 is configured to generate robot motion data based on the translated motion command. In the embodiments, the motion data may include position of each joint of the robot. In other embodiments, the motion data may further include one of the following: velocity of each joint of the robot, and acceleration of each joint of the robot.

In other embodiments, the robot control kernel 120 is also configured to configure its operation mode according to an operation mode instruction. The operation modes may include a simulation mode and a real mode. The simulation mode is a mode in which a motion simulation for a physical robot is performed, and the real mode is a mode in which the physical robot is really moved.

After configuration of the operation mode, the robot control kernel 120 may communicate the generated robot motion data to the robot Digital Twin 130 when the configured operation mode is the simulation mode, or communicate the generate robot motion data to a drive (or drives) 30 for a motor (or motors) 40 on the robot body when the configured operation mode is the real mode. The operation mode instruction may be also input from a robot operator (e.g., via a human machine interface (HMI) 150). Here, the drive 30 may be all kinds of drivers that can drive/control motors on the robot body. After receiving the robot motion data from the robot control kernel 120, the drive 30 controls the motors on the robot body to move according to the robot motion data from the robot control kernel 120, and receives the real motion data of the robot from the motors 40.

The robot Digital Twin 130 is the 3D modeling for robot simulation, and is configured to simulate the motion of the robot based on the generated robot motion data and physical conditions of the robot when the operation mode for the robot control kernel 120 is the simulation mode. The physical conditions of the robot may include: physical parameters of the robot body and payload of the robot. In an example, the physical parameters of the robot body may include at least one of: robot arm's mass, robot arm's length, motor fiction of each motor, and gravity of each joint, maximum rotation speed of each motor, rotation inertia of each motor, a torque of each motor and a current of each motor. The payload of the robot is the payload handled by the robot, such as the payload installed on the robot flange, an object holed by a robot arm etc. The robot Digital Twin 130 may receive the robot motion data from the robot control kernel 120 and physical conditions of the robot from the encoder of the motors, simulate the motion of the robot with the 3D modeling using the received robot motion data and physical conditions of the robot, and send the simulation result of the robot to a display device 50 external to the control system 10, and the display device 50 then displays the simulation result.

In another embodiment, the robot Digital Twin 130 may be further configured to communicate with the drive 30 for a motor 40 on the robot body when the operation mode is the real mode so as to receive real robot motion data from the drive 30, and simulate the motion of the robot based on the received real motion data. As much, the robot Digital Twin 130 may send the simulation result of the robot to a display device 50 external to the control system 10, and the display device 50 then displays the simulation result.

Further, in another embodiment, the control system 10 may include a command parser 140. The command parser 140 is configured to parse an operation mode command from the robot operator so as to identify the operation mode instruction. In an example, the robot operator inputs an operation mode command to the command parser 140 via an operation mode selection button provided on the HMI device 20. Here, the operation mode command may include a simulation mode command or a real mode command. After receiving the robot operation command, the command parser 140 parsers the inputted operation mode command to identify an operation mode instruction corresponding to the robot operation command. Then, the command parser 140 sends the identified operation mode instruction to the robot control kernel 120. The robot control kernel 120 configures its operation mode according to the identified operation mode instruction.

In other embodiments, the control system 10 may further include a human machine interface (HMI) 150 for input the operation mode command for robot and the motion command for robot. In an example, the robot operator may input operation commands and the motion command to the control system 10 via the HMI 150 by using a HMI device 20. In this case, the HMI 150 is provided between the HMI device 20 and the command parser 140/the program executor 110. In other embodiments, the HMI 150 may also be provided on a device external to the control system, such as a computer, a tablet, and a mobile terminal etc.

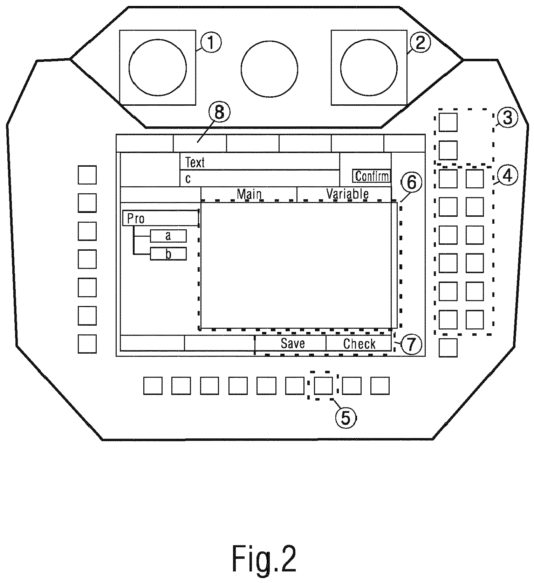

FIG. 2 illustrates an example of a human machine interface according to an embodiment of the subject matter. As shown in FIG. 2, a robot operator can input a robot motion command (i.e., a robot program) via a robot programming window 6. After saving and language checking of the robot motion command (through pressing a saving and language checking button 7), the robot motion command can be loaded to the program executor 110 for translation.

Further, the robot operator can input an operation mode command to the command parser 140 via a button for choosing a simulation mode or a real mode. Here, the button may be a virtual button or a physical button. The command parser 140 parses the operation mode command to obtain an operation mode instruction. Further, the robot operator can input a program START/END command via a Start/Stop button 3 to the command parser 140. After parsing the program START/END command, the command parser 140 may send a program start/end instruction to the program executor 110 so as to start/end the execution of the robot program, i.e., the translation of the inputted program command.

In other embodiments, the control system 10 may further include a drive interface 160 for exchanging data between the robot control kernel 120 and the drive 40 for motors on the robot.

In other embodiments, the robot Digital Twin 130 may be further configured to send the simulated motion data of the robot back to the robot control kernel 120 when the operation mode is the simulation mode, and the robot control kernel 120 then adjusts the robot motion data based on the simulated motion data. For example, the robot control kernel 120 may adjust the position set point calculated based on the motor position feedback from the robot Digital Twin, thus the motor position can follow the position set point calculated by the robot control kernel in time. By adjusting the robot data in the robot control kernel 120, the influence caused by the physical conditions of the robot (e.g., the heavy payload on the robot flange) may be compensated.

In other embodiments, the robot control kernel 120 may be further configured to: receive real robot motion data from the drive 40 for motors on the robot body when the operation mode is the real mode, and adjust the robot motion data based on the received real robot motion data.

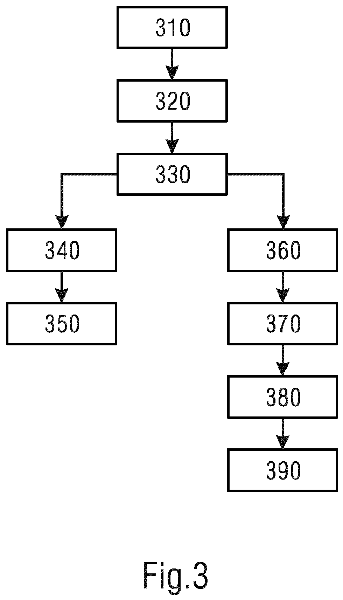

FIG. 3 illustrates a flowchart for simulating in the control system according to an embodiment of the subject matter. As shown in FIG.3, in block 310, the program executor 110 translates a motion command for a robot so as to have a format that is identifiable by a robot control kernel 120. In the embodiments, the motion command may be a command for instructing a robot to move in a specified motion manner. The motion command for a robot may include a moving command, a grabbing command, a releasing command, a walking command, a running command, a rotating command, a jumping command etc. In general, the motion command may have a format that may be identified by the program executor 110 (such as a text format, a program language format etc.) and unidentified by the robot control kernel 120, and inputted to the program executor 110 from a robot operator (e.g., via a human machine interface (HMI) 150). After receiving the motion command, the program executor 110 may translate the format of the motion command so as to have a format that is identifiable by the robot control kernel 120, that is, translate the motion command into a command and a parameter value of the command that are identifiable by the robot control kernel 120. Here, the program executor 110 is similar to a compiler.

In block 320, the program executor 110 sends the translated motion data to the robot control kernel 120, and the robot control kernel 120 generates robot motion data based on the received translated motion command. Next, in block 330, the robot control kernel 120 configures its operation mode according to an operation mode instruction, wherein the operation mode is a simulation mode or a real mode. Here, the operation mode instruction may be inputted by the robot operator.

When the robot control kernel 120 is configured to operate at a simulation mode, in block 340, the robot control kernel 120 communicates the generated robot motion data to the robot Digital Twin 130. Next, in block 350, the robot Digital Twin 130 simulates the motion of the robot based on the generated robot motion data and physical conditions of the robot. Here, the physical conditions of the robot may be received from the encoder of the motors in advance or in time.

When the robot control kernel 120 is configured to operate at a real mode, in block 360, the robot control kernel 120 communicates the generated robot motion data to the drive 30 for a motor 40 on the robot body. Next, in block 370, the drive 30 controls the motors on the robot body to move according to the robot motion data from the robot control kernel 120, and the drive 30 also receives real motion data of the robot from the motor 40.

After receiving the real motion data of the robot from the motors 40, in block 380, the drive 30 sends the real motion data of the robot to the robot Digital Twin 130. Then, in block 390, the robot Digital Twin 130 performs the simulation based on the real motion data of the robot. In other embodiments, the robot Digital Twin 130 may send the simulation result to a display unit external to the control system 10 for displaying.

In another embodiment, the robot operator inputs a robot operation command via the HMI device 20 and the HMI 150, and the method further include: parsing the robot operation command from a robot operator so as to identify the operation mode instruction for the robot control kernel 120. In this case, the robot control kernel 120 configures its operation mode according to the identified operation mode instruction.

It is noted that the embodiment of Fig. 3 is only an implementation of the application. In other embodiments, some steps of flowchart in Fig.3 may be omitted or some new steps may be added into the flowchart in Fig.3. For example, in a method for simulating in the control system according to an embodiment of the subject matter, there may be blocks 310, 320, 340 and 350.

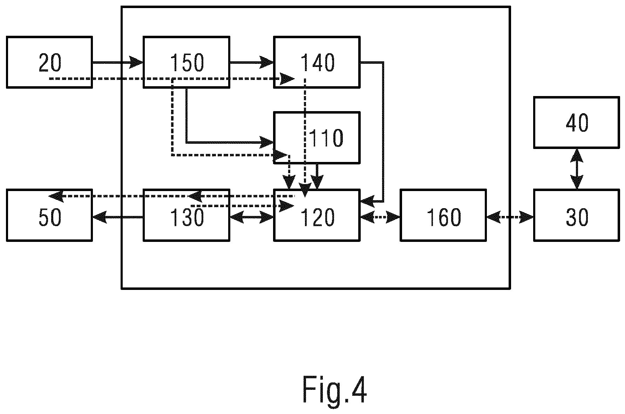

FIG. 4 illustrates a data flow for a simulation mode in a control system according to an embodiment of the subject matter. As shown in FIG. 4, a robot operator inputs a simulation operation mode command and a motion command via a HMI 150 using a HMI device 20. After receiving the simulation operation mode command, the command parser 140 identifies a simulation mode instruction for the robot control kernel 120, and then sends the simulation mode instruction to the robot control kernel 120. The robot control kernel 120 configures its operation mode as a simulation mode. After receiving the motion command with a format that is unidentifiable by the robot control kernel 120, the program executor 110 translates the format of the motion command so as to have a format that is identifiable by the robot control kernel 120. The robot control kernel 120 generates robot motion data based on the translated motion command. Further, the robot control kernel 120 sends the generated robot motion data to the robot Digital Twin 130. The robot Digital Twin 130 performs the simulation based on the robot motion data and physical conditions of the robot, and then sends the simulation result to the display device 50 for displaying. Further, the robot Digital Twin 130 may sends the simulation motion data back to the robot control kernel 120, and the robot control kernel 120 uses the simulation motion data to adjust its original generated robot motion data.

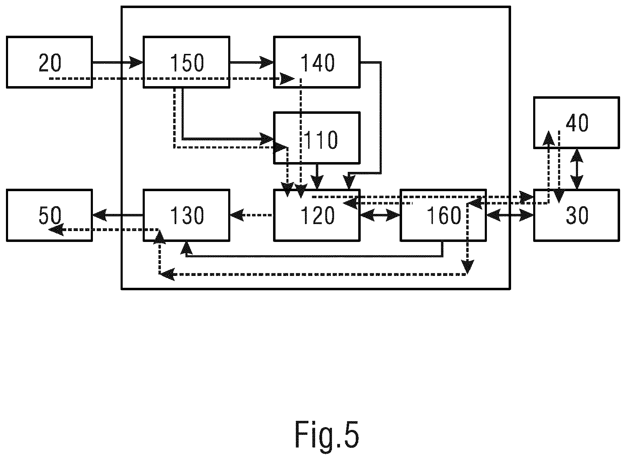

FIG. 5 illustrates a data flow for a real mode in a control system according to an embodiment of the subject matter. As shown in FIG. 5, a robot operator inputs a real operation mode command and a motion command via a HMI 150 using a HMI device 20. After receiving the real operation mode command, the command parser 140 identifies a real mode instruction for the robot control kernel 120, and then sends the real mode instruction to the robot control kernel 120. The robot control kernel 120 configures its operation mode as a real mode. After receiving the motion command with a format that is unidentifiable by the robot control kernel 120, the program executor 110 translates the format of the motion command so as to have a format that is identifiable by the robot control kernel 120. The robot control kernel 120 generates robot motion data based on the translated motion command. Further, the robot control kernel 120 sends the generated robot motion data to the drive 30 for the motor 40 on the robot body via a drive interface 160. After receiving the robot motion data, the drive 30 controls the motor 40 on the robot body to move according to the robot motion data from the robot control kernel 120, and receives the real motion data of the robot from the motors 40. The drive 30 may send the real motion data back to the robot control kernel 120, and the robot control kernel 120 uses the real motion data to adjust its original generated robot motion data. The drive 30 may also send the real motion data back to the robot Digital Twin 130. The robot Digital Twin 130 performs the simulation based on the real motion data of the robot, and then sends the simulation result to the display device 50 for displaying.

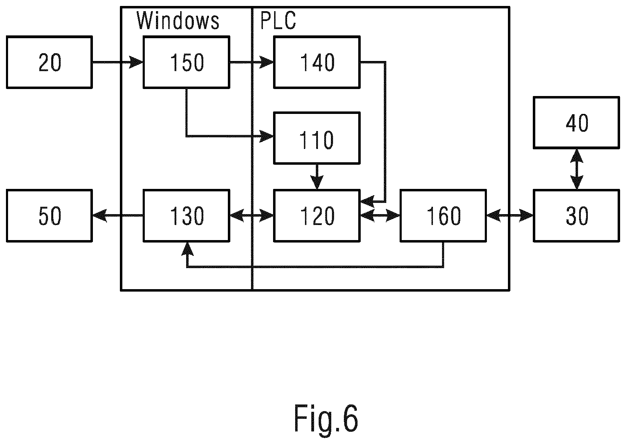

Further, in other embodiments, the control system 10 may be a dual-core system, wherein one core is an operation system (OS) core and the other core is a programmable logic controller (PLC) core. The OS core may include a Windows core or a Linux core. FIG. 6 illustrates an example of a control system having a dual-core according to an embodiment of the subject matter. As shown in FIG.6, the HMI 150 and the robot Digital Twin 130 are deployed on the Windows core, and the command parser 140, the program executor 110, the robot control kernel 120 and the drive interface 160 are deployed on the PLC core.

It should be appreciated that although various modules and functions are described with reference to FIGs. 1-6, not all of the functions and/or modules are necessary in a specific implementation and some functions may be implemented in one module and may also be implemented in multiple modules.

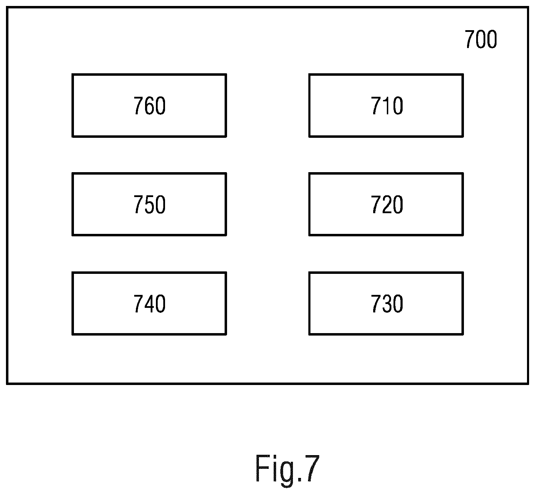

FIG. 7 illustrates an apparatus 700 for simulating a motion of a robot according to an embodiment of the subject matter. The apparatus 700 may include a translating means 710, a generating means 720, and a simulating means 730.

The translating means 710 is configured to translate a motion command for the robot for a robot so as to have a format that is identifiable by a robot control kernel 120 of the control system 10. The generating means 720 is configured to generate robot motion data based on the translated motion command. The simulating means 730 is configured to simulate the motion of the robot based on the generated robot motion data and physical conditions of the robot during robot simulation.

Further, the apparatus 700 may also include a configuring means 740 and a communicating means 750. The configuring means 740 is adapted to configure an operation mode for a robot according to an operation mode instruction, wherein the operation mode may be one of a simulation mode and a real mode. The communicating means 750 is configured to communicate the generated robot motion data to a simulating means when the configured operation mode is the simulation mode or to a drive for a motor on the robot body when the configured operation mode is the real mode.

Further, the simulating means 730 may be also configured to receive real robot motion data from the drive for the motor on the robot body when the configured operation mode is the real mode, and simulate the motion of the robot based on the received real robot motion data.

Further, the apparatus 700 may further include a parsing means 760 for parsing an operation mode command from a robot operator so as to identify the operation mode instruction for the robot control kernel. In this case, the configuring means 740 is for configuring an operation mode of the robot control kernel according to the identified operation mode instruction.

It should be appreciated that the translating means 710, the generating means 720, the simulating means 730, the configuring means 740, the communicating means 750 and the parsing means 760 may be configured to perform the operations or functions described above with reference to FIGs. 1-6.

It should be appreciated that modules and corresponding functions described with reference to FIGs. 1-6 are for sake of illustration rather than limitation, a specific function may be implemented in different modules or in a single module.

The respective modules as illustrated in FIGs. 1-6 may be implemented in various forms of hardware, software or combinations thereof. In an embodiment, the modules may be implemented separately or as a whole by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. In another embodiment, the modules may be implemented by one or more software modules, which may be executed by a general central processing unit (CPU), a graphic processing unit (GPU), a Digital Signal Processor (DSP), etc.

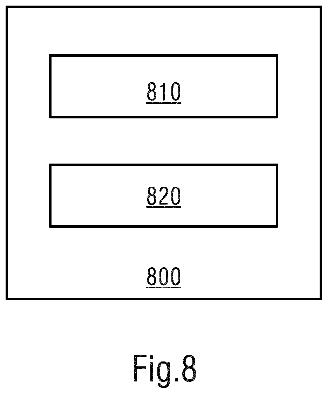

FIG. 8 illustrates a block diagram of a computer system 800 for simulating a motion of a robot according to an embodiment of the subject matter. According to one embodiment, the computer system 800 may include one or more processors 810 that execute one or more computer readable instructions stored or encoded in computer readable storage medium such as memory 820.

In an embodiment, the computer-executable instructions stored in the memory 820, when executed, may cause the one or more processors to: translate a motion command for a robot so as to have a format that is identifiable by a robot control kernel; generate robot motion data by the robot control kernel based on the translated motion command; and simulate the motion of the robot based on the generated robot motion data and physical conditions of the robot during robot simulation.

According to an embodiment, a program product such as a machine-readable medium is provided. The machine-readable medium may have instructions thereon which, when executed by a machine, cause the machine to perform the operations or functions as described above with reference to FIGs. 1 to 6 in various embodiments of the subject matter.

It should be noted that the above-mentioned solutions illustrate rather than limit the subject matter and that those skilled in the art would be able to design alternative solutions without departing from the scope of the appended claims. In the claims, any reference signs placed between parentheses shall not be construed as limiting the claim. The word "comprising" does not exclude the presence of elements or steps not listed in a claim or in the description. The word "a" or "an" preceding an element does not exclude the presence of a plurality of such elements. In the system claims enumerating several units, several of these units can be embodied by one and the same item of software and/or hardware. The usage of the words first, second and third, et cetera, does not indicate any ordering. These words are to be interpreted as names.

### FURTHER EMBODIMENTS

1. A control system for a robot, comprising:
   a program executor (110) to translate a motion command for the robot so as to have a format that is identifiable by a robot control kernel (120);
   a robot control kernel (120) to generate robot motion data based on the translated motion command; and
   a robot Digital Twin (130) to simulate the motion of the robot based on the generated robot motion data and physical conditions of the robot during robot simulation.
2. The control system of claim 1, wherein the robot control kernel (120) is further configured to:
   configure its operation mode according to an operation mode instruction for the robot, wherein the operation mode includes one of a simulation mode and a real mode; and
   communicate the generated robot motion data to the robot Digital Twin (130) when the operation mode is the simulation mode or to a drive (30) for a motor (40) on the robot body when the operation mode is the real mode.
3. The control system of claim 2, further comprising:
   a command parser (140) to parse an operation mode command for the robot so as to identify the operation mode instruction.
4. The control system of any one of claims 2 to 3, wherein the robot Digital Twin (130) is further configured to:
   receive real robot motion data from the drive (30) when the operation mode is the real mode, and
   simulate the motion of the robot based on the received real robot motion data.
5. The control system of any one of claims 1 to 4, wherein the physical conditions of the robot comprise: physical parameters of the robot body and payload of the robot.
6. The control system of claim 5, wherein the physical parameters of the robot body comprise at least one of: robot arm's mass, robot arm's length, motor fiction of each motor, and gravity of each joint, maximum rotation speed of each motor, rotation inertia of each motor, a torque of each motor and a current of each motor.
7. The control system of any one of claims 1 to 6, further comprising:
   a human machine interface (150) to input the operation mode command and/or the motion command; and/or
   a drive interface (160) to exchange data between the robot control kernel (120) and the drive (30).
8. The control system of any one of claims 2 to 7, wherein the robot Digital Twin (130) is further configured to send the simulated motion data of the robot back to the robot control kernel (120) when the operation mode is the simulation mode, and the robot control kernel (120) is further configured to adjust the generated robot motion data based on the simulated motion data.
9. The control system of any one of claims 2 to 8, wherein the robot control kernel (120) is further configured to:
   receive real robot motion data from the drive (30) when the operation mode is the real mode, and
   adjust the generated robot motion data based on the real robot motion data.
10. The control system of any one of claims 1-9, wherein the robot motion data comprises at least one of: position of each joint of the robot, velocity of each joint of the robot, and acceleration of each joint of the robot.
11. The control system of any one of claims 1 to 10, wherein the control system (10) is a dual-core system including an operation system (OS) core and a programmable logic controller (PLC) core, and wherein the robot Digital Twin (130) is deployed on the OS core, and the program executor (110) and the robot control kernel (120) are deployed on the PLC core.
12. A method for simulating motion of a robot in a control system (10), comprising:
   translating a motion command for the robot from a robot operator so as to have a format that is identifiable by a robot control kernel (120) of the control system (10);
   generating robot motion data based on the translated motion command by the robot control kernel (120); and
   simulating the motion of the robot based on the generated robot motion data and physical conditions of the robot during robot simulation.
13. The method of claim 12, further comprising:
   configuring an operation mode for the robot control kernel (120) by the robot control kernel (120) according to an operation mode instruction for the robot, wherein the operation mode includes one of a simulation mode and a real mode; and
   communicating the generate robot motion data to a robot Digital Twin (130) of the control system (10) when the configured operation mode is the simulation mode or to a drive (30) for a motor (40) on the robot when the configured operation mode is the real mode.
14. The method of claim 13, further comprising:
   parsing an operation mode command for the robot so as to identify the operation mode instruction.
15. The method of claim 13 or 14, further comprising:
   receiving real robot motion data from the drive (30) when the configured operation mode is the real mode, and
   simulating the motion of the robot based on the received real robot motion data.
16. The method of any one of claims 13-15, further comprising:
   adjusting the generated robot motion data based on the simulated motion data when the configured operation mode is the simulation mode.
17. The method of any one of claims 13-16, further comprising:
   receiving real robot motion data from the drive (30) when the configured operation mode is the real mode, and
   adjusting the generated robot motion data based on the real robot motion data.
18. An apparatus for simulating motion of a robot in a control system, comprising:
   a translating means for translating a motion command for the robot so as to have a format that is identifiable by a generating means;
   a generating means for generating robot motion data based on the translated motion command; and
   a simulating means for simulating the motion of the robot based on the generated robot motion data and physical conditions of the robot during robot simulation.
19. A computer system for simulating motion of a robot in a control system, comprising:
   one or more processors; and
   a memory coupled to the one or more processors, for storing computer-executable instructions that, when executed, cause the one or more processors to perform the method of any one of claims 12 to 17.
20. A non-transitory computer-readable medium having computer-executable instructions to cause a computer system to perform the method of anyone of claims 12 to 17.

## Claims

1. A control system for a robot, comprising:
a program executor (110) to translate a motion command for the robot so as to have a format that is identifiable by a robot control kernel (120);
a robot control kernel (120) to generate robot motion data based on the translated motion command; and
a robot Digital Twin (130) to simulate the motion of the robot based on the generated robot motion data and physical conditions of the robot during robot simulation.

2. The control system of claim 1, wherein the robot control kernel (120) is further configured to:
configure its operation mode according to an operation mode instruction for the robot, wherein the operation mode includes one of a simulation mode and a real mode; and
communicate the generated robot motion data to the robot Digital Twin (130) when the operation mode is the simulation mode or to a drive (30) for a motor (40) on the robot body when the operation mode is the real mode,
in particular further comprising:
a command parser (140) to parse an operation mode command for the robot so as to identify the operation mode instruction.

3. The control system of claim 2, wherein the robot Digital Twin (130) is further configured to:
receive real robot motion data from the drive (30) when the operation mode is the real mode, and
simulate the motion of the robot based on the received real robot motion data.

4. The control system of any one of claims 1 to 3, wherein the physical conditions of the robot comprise: physical parameters of the robot body and payload of the robot, in particular, wherein the physical parameters of the robot body comprise at least one of: robot arm's mass, robot arm's length, motor fiction of each motor, and gravity of each joint, maximum rotation speed of each motor, rotation inertia of each motor, a torque of each motor and a current of each motor.

5. The control system of any one of claims 1 to 4, further comprising:
a human machine interface (150) to input the operation mode command and/or the motion command; and/or
a drive interface (160) to exchange data between the robot control kernel (120) and the drive (30).

6. The control system of any one of claims 2 to 5, wherein the robot Digital Twin (130) is further configured to send the simulated motion data of the robot back to the robot control kernel (120) when the operation mode is the simulation mode, and the robot control kernel (120) is further configured to adjust the generated robot motion data based on the simulated motion data.

7. The control system of any one of claims 2 to 6, wherein the robot control kernel (120) is further configured to:
receive real robot motion data from the drive (30) when the operation mode is the real mode, and
adjust the generated robot motion data based on the real robot motion data.

8. The control system of any one of claims 1 to 7, wherein the robot motion data comprises at least one of: position of each joint of the robot, velocity of each joint of the robot, and acceleration of each joint of the robot.

9. The control system of any one of claims 1 to 8, wherein the control system (10) is a dual-core system including an operation system (OS) core and a programmable logic controller (PLC) core, and wherein the robot Digital Twin (130) is deployed on the OS core, and the program executor (110) and the robot control kernel (120) are deployed on the PLC core.

10. A method for simulating motion of a robot in a control system (10), comprising:
translating a motion command for the robot from a robot operator so as to have a format that is identifiable by a robot control kernel (120) of the control system (10);
generating robot motion data based on the translated motion command by the robot control kernel (120); and
simulating the motion of the robot based on the generated robot motion data and physical conditions of the robot during robot simulation.

11. The method of claim 10, further comprising:
configuring an operation mode for the robot control kernel (120) by the robot control kernel (120) according to an operation mode instruction for the robot, wherein the operation mode includes one of a simulation mode and a real mode; and
communicating the generate robot motion data to a robot Digital Twin (130) of the control system (10) when the configured operation mode is the simulation mode or to a drive (30) for a motor (40) on the robot when the configured operation mode is the real mode, in particular,
further comprising:
parsing an operation mode command for the robot so as to identify the operation mode instruction.

12. The method of claim 11, further comprising:
receiving real robot motion data from the drive (30) when the configured operation mode is the real mode, and simulating the motion of the robot based on the received real robot motion data, and/or
adjusting the generated robot motion data based on the simulated motion data when the configured operation mode is the simulation mode, and/or
receiving real robot motion data from the drive (30) when the configured operation mode is the real mode, and adjusting the generated robot motion data based on the real robot motion data.

13. An apparatus for simulating motion of a robot in a control system, in particular by employing a method according to any of the claims 10 - 12, the apparatus comprising:
a translating means for translating a motion command for the robot so as to have a format that is identifiable by a generating means;
a generating means for generating robot motion data based on the translated motion command; and
a simulating means for simulating the motion of the robot based on the generated robot motion data and physical conditions of the robot during robot simulation.

14. A computer system for simulating motion of a robot in a control system, the system comprising:
one or more processors; and
a memory coupled to the one or more processors, for storing computer-executable instructions that, when executed, cause the one or more processors to perform the method of any one of claims 10 to 12.

15. A non-transitory computer-readable medium having computer-executable instructions to cause a computer system to perform the method of anyone of claims 10 to 12.
